# EUROPEAN PATENT APPLICATION

(11) **EP 3 236 306 A1**
(43) Date of publication of application: **25.10.2017**
(21) Application number: 16166210.1
(22) Date of filing: 20.04.2016
(51) Int. Cl.: G02B 27/01, G06T 19/00, H04N 13/04

(54) **A METHOD FOR RENDERING A 3D VIRTUAL REALITY AND A VIRTUAL REALITY EQUIPMENT FOR IMPLEMENTING THE METHOD**

(71) Applicant: Hexkraft GmbH, 81675 München (DE)
(72) Inventor: Burkert, Joshua, 85238 Petershausen (DE); Boldrin, Alessandro, 81541 München (DE); Zintl, Martin, 80807 München (DE)
(74) Representative: Grünecker Patent- und Rechtsanwälte PartG mbB

(57) **Abstract**

The present invention relates to a method for rendering a three-dimensional virtual reality and a virtual reality equipment for implementing the method. According to an embodiment of the invention, the visual parameters used for rendering the virtual reality are variably determined according to the visual perception of a user's eye which reduces with distance from the focus point of the field of vision. Different weight functions for different parameters may be used for an optimized rendering of the virtual reality, the parameters reducing the computing power needed for rendering in towards the periphery of the field of vision.

## Description

### BACKGROUND

With decreasing sizes of high efficiency computing systems, the field of applications of computing systems widely increases. Nowadays, high efficient computing systems may be produced in such small sizes that the computing systems can be implemented in small devices such as glasses. One emerging field of such implementation is in the development of virtual reality glasses (VR glasses), or also called VR equipment.

VR glasses that are worn by a user give the user the impression to be, act and move in a three-dimensional virtual world. When a user in the virtual reality moves his head, the VR glasses detect such movement and adapt the graphical information shown to the user based on the movement of the head. Thus, it is possible for the user to experience a very realistic interaction with the VR world that is calculated and processed by the VR glasses.

The experience may be enhanced with all amenities available in real life, like art, furniture or any commercial products. One of the big benefits of the virtual home is that it enables a significantly larger information density accessible to the user in the virtual world. The amount of data requires significant computing power, which e.g. limits the performance on smart-phones used for virtual reality applications, or also regular computers in case of multiple screens with dynamic content.

A high density of graphical information due to a high number of objects in the VR world needs to be calculated and displayed. Thus, high computing power is required for calculating, rendering and displaying a detailed virtual reality.

### SUMMARY OF THE INVENTION

It is therefore an object of the invention to provide an improved computer-implemented method, virtual reality equipment and computer-readable medium for rendering three-dimensional graphics information of a virtual reality.

This object is solved by the subject matter of the independent claims.

Preferred embodiments are defined by the dependent claims.

The present invention relates to a method for rendering a three-dimensional virtual reality and a virtual reality equipment for implementing the method. According to an embodiment of the invention, the visual parameters or rendering parameters used for rendering the virtual reality are variably determined according to the visual perception of a user's eye in different areas of the peripheral field of vision. One or more weight functions for different rendering parameters may be used for an optimized rendering of the virtual reality. The 3D virtual reality may be an augmentation for a visual representation of a real world seen through the virtual reality equipment.

According to an embodiment of the invention a computer-implemented method for rendering 3D graphics information of a virtual reality to be displayed in virtual reality equipment, such as virtual reality glasses, is provided. The virtual reality equipment may have two portions each related to one eye of a user when using the virtual reality equipment.

The method may comprise the step of determining, for each portion, an inner area and at least one outer area of visual perception. However, multiple areas of visual perception may be determined resulting in a subdivision with a fine granularity. The inner area of visual perception may comprise a focal point. Further, the at least one outer area of visual perception may surround the inner area of visual perception. In the case of more than two areas of visual perception, the additional areas may be arranged around the innermost area comprising the focal point.

The method may further comprise the step of rendering, for each portion, a first graphical representation of a first subset of a 3D virtual reality to be displayed in the inner area of visual perception, and rendering, for each eye, a second graphical representation of a second subset of the 3D virtual reality to be displayed in one of the at least one outer areas of visual perception. In the case that more than two areas of visual perception are determined, more graphical representations and subsets of the 3D virtual reality are rendered as a composition of the output image.

According to an embodiment of the present invention, the rendering of the graphical representations may be based on a weight function for weighting one or more rendering parameters for the inner area and the at least one outer area. The one or more rendering parameters may comprise an information density and an update rate. Further, the weighting may comprise weighting the information density across the inner area and the at least one outer area and weighting the update rate across the inner area and the at least one outer area, respectively.

The rendering of the representations of the 3D virtual reality may comprise the step of calculating, for each eye, a flattened two-dimensional image from the 3D virtual reality and displaying, for each eye, the flattened 2D image to the respective eye of the user.

The different subsets of the 3D virtual reality for watching with the left eye may be different from the different subsets of the 3D virtual reality for watching with the right eye. Furthermore, the left-eye subsets and the right-eye subsets are linked to each other so that, when displayed to the respective eye, a 3D perception of the virtual reality is experienced by the user.

According to an embodiment, the weight function of the update rate may be based on a rate at which the eye is able to process changes within its field of view. Similarly, the information density may define at least one of a pixel density of the rendered graphical representation, a color density of the rendered graphical representation, and a contrast of the rendered graphical representation.

According to an embodiment, an interpolation algorithm may be used for calculating the rendered second graphical representation of the second subset of the 3D virtual reality to be displayed in the outer area of visual perception.

### BRIEF DESCRIPTION OF THE DRAWINGS

The above and other aspects, features, and advantages of the present invention will be more apparent from the following detailed description when taken in conjunction with the accompanying drawings, in which:
FIG. 1 illustrates an exemplary design of a virtual reality equipment, according to an embodiment of the present invention;
FIG. 2 illustrates a concept of peripheral vision of a human used for implementing the graphic rendering, according to an embodiment of the present invention;
FIG. 3 illustrates a block diagram of applying different weights of details for different areas in a rendered virtual reality, according to an embodiment of the present invention;
FIG. 4 illustrates a block diagram of applying different weight functions for different parameters, respectively, used for rendering a virtual reality, according to an embodiment of the present invention;
FIG. 5 illustrates a block diagram of an improved rendering process of a virtual reality, according to an embodiment of the present invention; and
FIG. 6 illustrates flow diagram for rendering a virtual reality, according to an embodiment of the present invention.

### DETAILED DESCRIPTION

An embodiment of the present invention relates to virtual reality glasses or virtual reality equipment and to an improved concept of rendering graphical information for displaying to a user wearing the virtual reality glasses or equipment. Different aspects of the present invention are shown to be efficient in order to decrease the processing power, power consumption and resulting heat production.

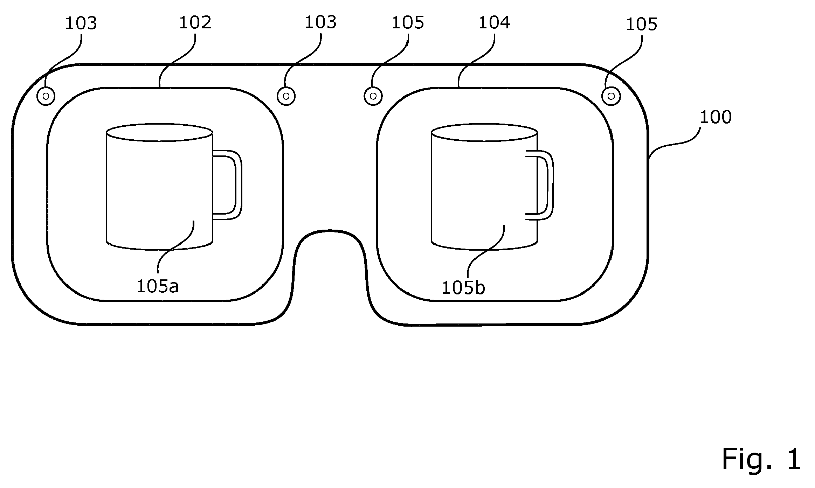

FIG. 1 illustrates an exemplary design of virtual reality (VR) equipment 100, according to an embodiment of the present invention. The VR equipment 100 may take the form of a head mounted display (HMD) that projects visual information directly onto the retina of a user's eye. However, also other implementations of the VR equipment 100 may be used to implement the present invention.

As can be seen in FIG. 1, the VR equipment 100 may comprise two display areas, i.e. a left display area 102 and a right display area 104. The display areas may also be referred to as portions related to one eye of a user when using the virtual reality equipment. The two display areas 102 and 104 of the VR equipment 100 are configured to display an object 105a and 105b, respectively, in a manner that a user wearing the equipment 100 experiences a 3D effect by watching at the virtual object 105.

For example, and as can be seen in FIG. 1, the object 105 is displayed differently in the left and right display areas 102 and 104 according to the perspective of the left eye and the right eye of a user. Thus, when the left eye of a user wearing the VR equipment 100 watches the object 105a within the left display area 102 and the right eye of the user watches the object 105b within the right display area 104 of the VR equipment 100, the user experiences a 3D perception of the object 105 due to the slightly different perspectives onto the object rendered for the two display areas 102 and 104.

In order to produce the virtual object 105 - or more general: a virtual reality - the VR equipment 100 may comprise at least one processing unit or rendering processor, such as a CPU (not shown) that is configured to compute a virtual reality according to stored computer instructions and in compliance with a user input. For example, the VR equipment 100 are configured to receive different types of user inputs, such as navigation inputs by means of an orientation sensor in the VR equipment 100, voice inputs by means of a microphone, eye-tracking inputs by means of one or more eye sensors (e.g. eye sensors 103 and 105 as further discussed below), gesture-driven inputs by means of a camera included in the VR equipment 100 that tracks gestures and movements of hands and fingers of a user and so on. The above examples of user inputs are not limiting for the present invention but should be interpreted as illustrative examples only for a user to interact with the virtual reality displayed in the display areas 102 and 104.

When using one or more input possibilities of the VR equipment 100, the user wearing the VR equipment 100 can manipulate the rendered and displayed virtual reality and may interact with objects of the virtual reality, such as object 105. Manipulating in this sense may be interpreted as interacting with the object, such as converting, moving, rotating, working on, deleting, viewing at the object from different angles and distances of the object etc. The processing unit of the VR equipment 100 may detect such user inputs, may calculate a result of a user interaction with the virtual reality and may render the result for displaying in the display areas 102 and 104.

Multiple fields of application may be given for the VR equipment 100, such as a virtual office displaying multiple desktops to work on at the same time. For displaying a virtual office including a high number of desktops, a high information density is displayed in the display areas 102 and 104 that needs to be processed by the processing unit of the VR equipment 100. However, the application of a virtual office may only be seen as an example and many other fields of application requiring a high information density to be displayed in the display areas 102 and 104 are possible.

For example, another field of application may be the virtual home, where one lives and works in an environment with enhanced productivity and aesthetics in a virtual world. Any experience may be more intense, work and conferencing very efficient, leisure time like watching movies etc. very pleasant and it can be shared with friends. The experience may be enhanced with all amenities available in real life, like art, furniture or any commercial products, with corresponding business models behind it, which match the consumer behavior and consume oriented thinking.

One of the big benefits of the virtual home is that it enables a significantly larger information density accessible to the user in the virtual world. The amount of data requires significant computing power, which e.g. limits the performance on smart-phones used for virtual reality applications, or also regular computers in case of multiple screens with dynamic content.

Notably, the term "virtual reality" in the sense of the present invention may not be limited to a "pure" virtual reality where everything a user sees through the display areas 102 and 104 is a result of calculation and rendering of the processing unit. Instead, in some embodiments, the term "virtual reality" may also be interpreted as "augmented reality" where only some calculated virtual objects are displayed together with a real world environment that a user would see without wearing the VR equipment 100.

According to embodiments of the present invention, the VR equipment 100 may comprise left eye sensors 103 and right eye sensors 105 for tracking and detecting eye movement of the user. For example, the eye sensors 103 and 105 may detect and track a focal point of a user's eye, i.e. a point in the virtual reality that is focused by the user's eye. This information input through the eye sensors may be utilized for different aspects of the present invention. In one embodiment, the information obtained through the eye sensors 103 and 105 may be converted into a user input as discussed above. In one embodiment, the information obtained through the eye sensors 103 and 105 may be used to improve the efficiency of rendering and displaying the virtual reality through the display areas 102 and 104 of the VR equipment 100, as will be further discussed below.

It should be appreciated that the number of eye sensors 103 and 104 per eye may be different than two as illustrated in FIG. 1. Thus, more or less eye sensors for detecting and tracking a focal point of a user's eye may be implemented in the VR equipment 100 without departing from the scope of the present invention.

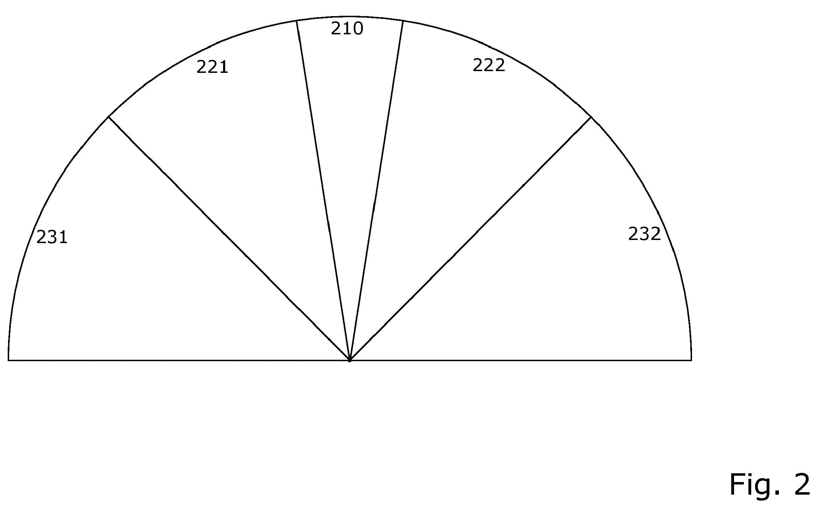

As discussed above, the determining and tracking of a focal point of the user's eye may be used to improve the efficiency of calculating, rendering and displaying a virtual reality seen through the VR equipment 100. More specifically, in an embodiment of the present invention, the peripheral vision of a user is utilized for reducing the time required for computing and rendering the virtual reality as will be further discussed below. FIG. 2 illustrates a block diagram for explaining the concept of peripheral vision of a human used for implementing the graphic rendering, according to an embodiment of the present invention.

The peripheral vision of a human is the part of vision that occurs outside the center of gaze. For example, far peripheral vision refers to the areas 231 and 232 at the edges of the visual field, mid-peripheral vision exists in the areas 221 and 222 of the visual field, and near-peripheral vision exists in the area 210 close around the center of gaze in a forward direction.

Notably, the diagram illustrated in FIG. 2 and to the corresponding subdivision into the different areas is only an illustrative example for demonstrating the concept of peripheral vision. In reality, the subdivision into different areas of peripheral vision may be done with a higher granularity, resulting in a high number of different areas of peripheral vision.

The focal point of a human eye lies within the area 210. In this area 210, the human eye recognizes a high resolution and a high level of details. In other words, when a user has his focal point directed onto an object in a virtual reality, the user would recognize single pixels within the area 210 if the resolution of the virtual reality is not high enough. However, the user may not recognize single pixels within the areas 221 and 222 at the same resolution of the virtual reality. The same applies to the outer areas 231 and 232 where the human eye may not recognize lower resolutions at all.

The diagram of FIG. 2 may be determined and optimized for different visual parameters, such as pixel density, color density, update rate of a moving picture and contrast. However, more or less parameters may be available.

The present invention utilizes the fact that the human eye has different levels of perception depending on the peripheral vision of the human eye. In one embodiment, graphical representations of a virtual reality may be rendered with variable pixel density depending on the location of a focal point of a user's eye.

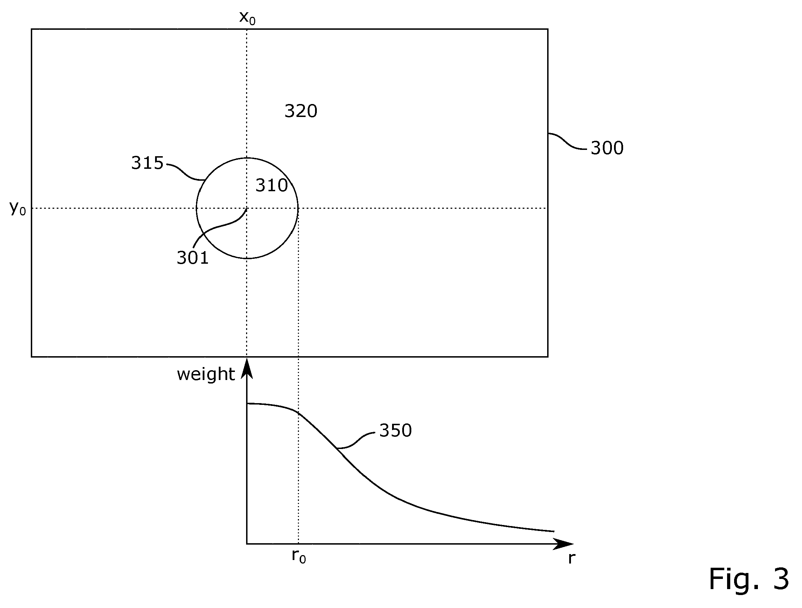

FIG. 3 illustrates an embodiment where a user's eye is tracked via one or more eye sensors 103 and/or 105. More specifically, FIG. 3 illustrates a virtual reality image screen 300 that may be displayed within one of the display areas 102 or 104 of FIG. 1. As can be seen in the illustrative diagram of FIG. 3, the focal point 301 is determined to be at the position x₀ and y₀. In this first exemplary embodiment of FIG. 3, the VR image screen is 300 is rendered and displayed according to a weight function 350 for a visual parameter, such as the pixel density. For example, the VR image screen 300 may be subdivided into an inner area 310 and at least one outer area 320 of visual perception of the eye of the user. The inner area 310 comprises the focal point 301.

The VR image screen 300 may then be rendered according to the two different areas 310 and 320. For example, a first graphical representation of a first subset of a three-dimensional virtual reality may be rendered for the inner area 310 and a second graphical representation of a second subset of the 3D virtual reality may be rendered for the outer area 320. The boundary 315 between the in the area 310 and the outer area 320 may be determined based on the weight function 350.

The weight function 350 is an exemplary function that describes a pixel density perception of a human eye in dependence of the distance r from the focal point 310 (x₀, y₀). As can be seen in the exemplary embodiment of FIG. 3, the inner area 310 may be defined around the focal point 301 and has a radius r₀ defining an area in that the weight function 350 is substantially at a constant high value. Likewise, the outer area 320 is arranged around the inner area 310 where the weight function 350 decreases.

More specifically, the weight function 350 is used for weighting one or more rendering parameters for the inner area 310 and the at least one outer area 320. Rendering parameters - or also called visual parameters within this specification - may be for example a pixel density, a color density, a contrast, an update rate among others. Thus, when applying the weighting function 350 to a picture that would normally be rendered with constant render parameters across the image, the rendering parameters become a function dependent on the location of pixels in the picture.

For example, the rendering parameters may comprise an information density and an update rate, and the weighting may comprise weighting the information density across the inner area and the outer area and weighting the update rate across the inner area and the at least one outer area, respectively.

In this implementation of the embodiment of FIG. 3, the VR image screen 300 may be regarded as two separate images that are separately rendered, i.e. a first image rendered with a high resolution (or other visual parameter) to be displayed in the inner area 310 and a second image rendered with a lower resolution (or other visual parameter) to be displayed in the outer area 320. In other words, all information outside the inner area 310 for perception (can be different for colors, update rate, pixel density and every other parameter from perception known in psychology) is reduced to save computing power.

Notably, FIG. 3 is an illustrative example only and should not be regarded as limiting for the invention. For example, more areas than the two areas 310 and 320 may be defined for a visual parameter. In one embodiment, multiple outer areas may be defined that are infinitesimally arranged around each other according to a weight function for a visual parameter. For example, according to one embodiment, the VR image screen 300 may be subdivided into multiple areas or regions with sizes, geometries and distributions that are dependent on functions defined in space that may be different for different visual parameters. The weight functions may then be used for the rendering process, for example where a picture is rendered with variable pixel density according to the weight function defining a weight for each area of the picture.

By separating an image into multiple areas according to one or more weight functions and rendering the image with variable visual parameters (e.g. variable pixel resolution, color density, contrast, update rate for moving pictures), the processes of calculating, saving and displaying the image may be improved, especially for high resolution images.

For example, the saving in computing power may be squared with the angle away from the focal point of view for pixel depth, linear with color depth and linear with update rate. As an example, with an angle of 180 degrees as maximal field of view for VR equipment 100 and a (in a simple implementation) 20 degrees of main field of view (e.g. the inner area 310) and a linearly decreasing slope for each weight curve, a factor 100 for the pixel density, a factor 10 for color depth and a factor of 5 for update rate may be obtained, resulting in a reduced effort for computing by a factor of 5000 for a full VR world. In case of embedded 2D content in a virtual reality space in e.g. windows or screens inside the virtual reality, the saving can be applied individually for each window and the overall saving is a combination of the virtual reality and the embedded content.

The saving for computing power is drastic for 4K resolution and for high pixel density in virtual reality equipment 100. In addition, with this technique of the present invention, the sickness experienced by users moving in the VR can be decreased, while moving in the virtual reality.

According to one embodiment, the information content, i.e. the information density can be further optimized by taking into account the acuity falloff of optical lenses inside the display areas 102 and 104 towards the edge of the field of view. In other words, processing time of the processing unit may be decreased in cases where the human eye cannot resolve the displayed content anyway due to quality limitations of the optical system (i.e. lenses) of the VR equipment 100. This aspect will become even more important in future VR equipment systems with increased pixel resolution because the development of high resolution displays is easier than the development of better lens optics. Thus, adapting the rendering of a picture not only to the visual perception of a user's eye, but also to the optical characteristics of the lens system of the VR equipment 100 may improve the efficiency of rendering the virtual reality even more.

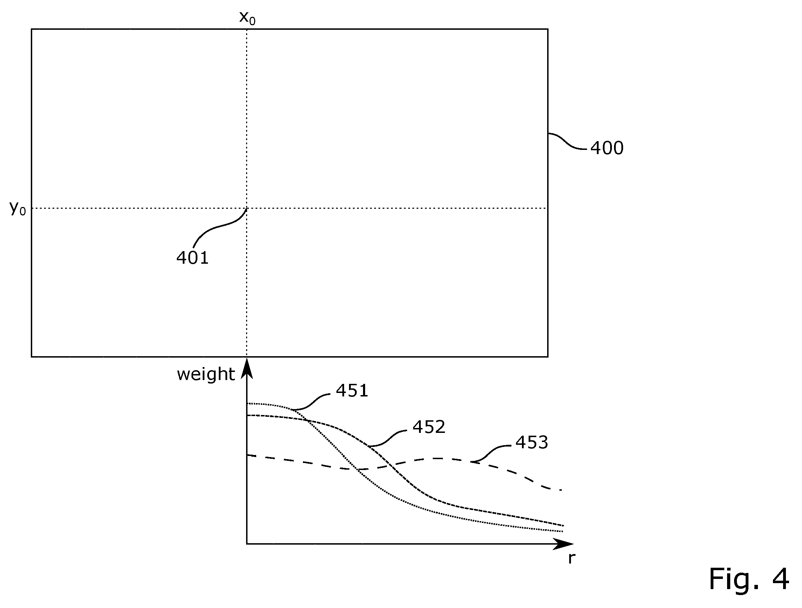

FIG. 4 illustrates a block diagram of applying different weight functions for different parameters, respectively, used for rendering a virtual reality, according to an embodiment of the present invention. In particular, FIG. 4 shows a VR image screen 400 where it is determined that a focal point 401 is located at the location (x₀, y₀). This determination of the focal point 401 may be performed through the eye sensor(s) 103 and/or 105, as discussed above.

As can be seen in FIG. 4, the VR image screen 400 may not necessarily be divided into two areas, such as in FIG. 3, but may be divided in multiple areas of visual perception (not shown). For example, there may be determined one inner area of visual perception comprising the focal point 401 and a plurality of additional outer areas of visual perception, wherein each of the additional outer areas surrounds the inner area of visual perception. The picture may then be rendered in the next step. More specifically, each of the determined areas of visual perception of the VR image screen 400 may then be rendered according to variable visual parameters based on a respective weight function 451, 452, and 453.

For example, as discussed above, the pixel density within the VR image screen 400 may vary according to a weight function 451. This means that the pixel density has its highest value where the focal point 401 has been located and decreases with increasing distance from the focal point 401 according to the weight function 451. Another weight function 453 may be used for an update rate in case of a moving picture. In some scenarios, it might be necessary that the update rate according to the weight function 453 may substantially not decrease in the outer areas of visual perception, i.e. may not decrease with increasing distance from the focal point 401.

More generally, the weight functions 451, 452, and 453 for different visual parameters, respectively, may be based on psychological measurements of the perception of a human eye for the different visual parameters. According to one embodiment of the present invention, the VR equipment 100 may further comprise an auto training module (not shown) that utilizes the eye sensor(s) 103/105 in order to measure an abnormality in eye-movement of a user. For example, such an abnormality in eye-movement of the user may indicate that one of the weight functions 451, 452, and 453 according to different visual parameters may not be adjusted properly. Therefore, the auto training module of the VR equipment 100 may readjust the corresponding weight function in order to optimize the rendering process.

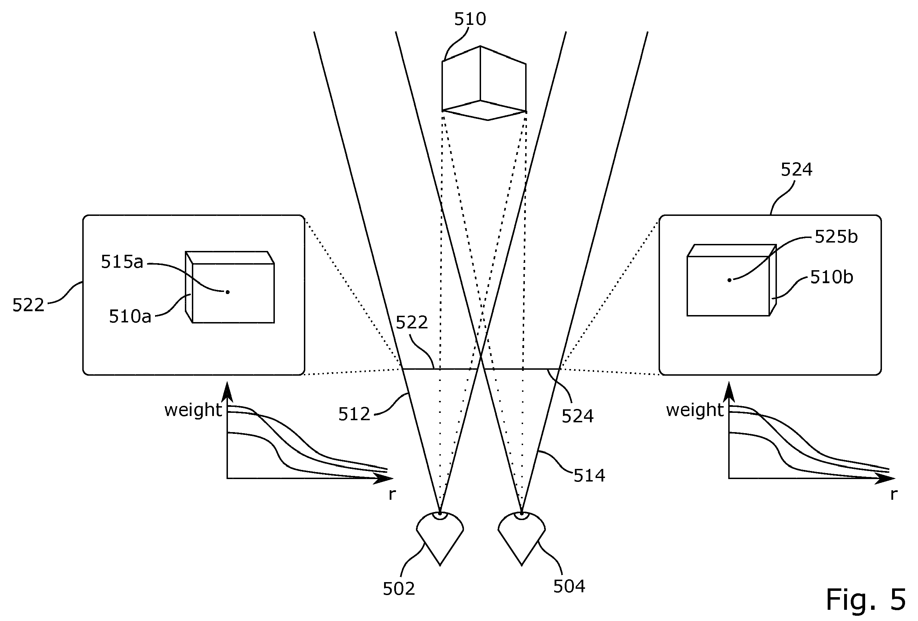

FIG. 5 illustrates a block diagram of an improved rendering process of a virtual reality, according to an embodiment of the present invention. As can be seen in FIG. 5, a 3D object 510 to be projected onto a left eye 502 and right eye 504 may be calculated by the processing unit of the VR equipment 100. Notably, the 3D object 510 represents a calculated virtual reality that is to be presented to a user. The user has a left eye 502 and a right eye 504. Each of the left eye 502 and the right eye 504 has a left visual field 512 and a right visual field 514, respectively. These visual fields 512 and 514 may be formed according to the concept of FIG. 2.

In order to display the object 510 onto the user's eyes 502 and 504, the processing unit of the VR equipment 100 may calculate for each eye a flattened two-dimensional image from the 3D object 510. Such exemplary flattened two-dimensional images of the three-dimensional object 510 is shown in the left VR image screen 522 and in the right VR image screen 524, respectively. For example, the left VR image screen 522 comprises the rendered object for left eye vision 510a and the right VR image screen 524 comprises the rendered object for right eye vision 510b. As can be seen in FIG. 5, the rendered object for left eye vision 510a is captured under a slightly different angle than the rendered object for right eye vision 510b. However, the two rendered objects 510a and 510b are linked to each other so that, when displayed to the respective eye, a 3-D perception of the virtual reality, i.e. of the object 510, is experienced by the user.

As can be seen in the left VR image screen 522, a left eye focal point 515a is determined by the VR equipment 100 being located on the rendered object for left eye vision 510a. Likewise, as can be seen in the right VR image screen 524, a right eye focal point 525b is determined by the VR equipment 100 being located on the rendered object for right eye vision 510b. According to embodiments of the present invention, the respective areas comprising the respective focal points 515a and 525b (i.e. the inner areas of visual perception) may be rendered with a higher pixel resolution, as discussed above. More specifically, the respective weight functions may be applied to the focal points 515a and 525b when rendering the virtual reality into the left VR image screen 522 and the right VR image screen 524.

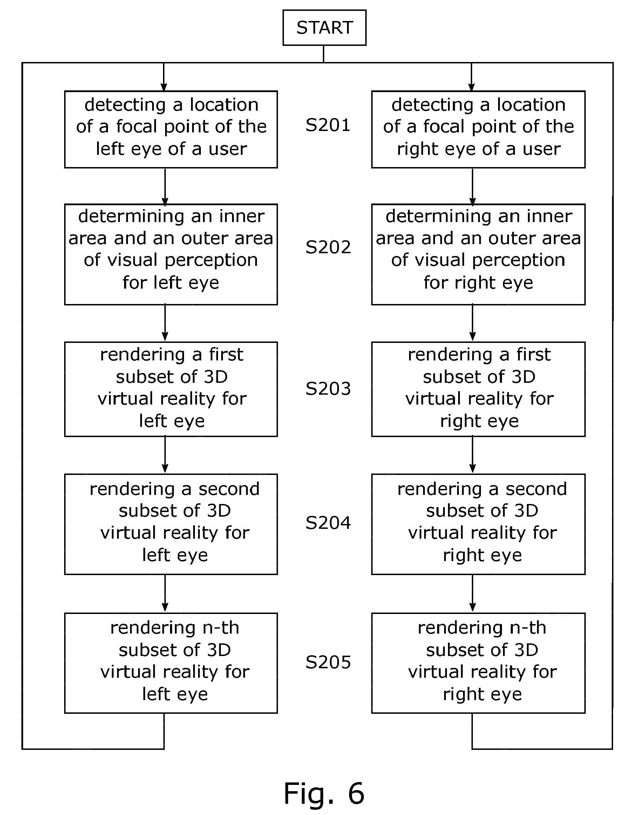

FIG. 6 illustrates flow diagram for rendering a virtual reality, according to an embodiment of the present invention.

The method starts in step S201 where for a left eye and a right eye of a user a location of the respective focal point is detected. More specifically, the focal points of the user's eyes when looking at the displayed virtual reality within the VR equipment 100 are detected and tracked. As discussed above, this detection of the focal point of the eye of the user may be performed by one or more of the eye sensors 103 and 105.

Thereafter, in step S202, and inner area and at least one outer area of visual perception for each eye are determined. As discussed above, there may be determined a high number of outer areas, i.e. a fine granularity of boundaries between the multiple outer areas. The definition of multiple areas of visual perception subdivides the picture of the virtual reality into multiple subsets of the virtual reality to be displayed.

After the different areas of visual perception are determined in step S202, the multiple subsets of the virtual reality are to be rendered for the respective eye. This is performed in steps S203 to S205, where for each of n areas for each eye a respective subset of the virtual reality is rendered. For example, in one implementation, the number of areas may be set to n=10. This requires that 10 different areas of visual perception are defined, with the innermost area comprising the focal point of an eye of the user. When rendering the multiple subsets of the virtual reality for each eye, each of the multiple subsets is rendered into one of the multiple areas based on one or more weight functions according to one or more visual parameters.

For example, the innermost area comprising the focal point of an eye may be rendered with the highest pixel density and update rate for moving pictures. The next area directly surrounding the innermost area may be rendered with a slightly lower pixel density and with the substantially same update rate as the innermost area, and so on for all of the 10 areas for each eye. It should be understood that this is an illustrative example only and is not intended to limit the scope of the invention.

According to an embodiment of the present invention, the rendering of at least one of the outer areas of visual perception may be based on an interpolation algorithm applied to the innermost area of visual perception.

## Claims

1. A computer-implemented method for rendering three-dimensional, 3D, graphics information of a virtual reality to be displayed in virtual reality equipment (100) for a user, said virtual reality equipment having two portions (102, 104) each related to one eye of a user when using the virtual reality equipment, the method comprising:
determining, for each portion, an inner area (310) and at least one outer area (320) of visual perception, wherein the inner area of visual perception comprises a focal point (301), and wherein the at least one outer area of visual perception surrounds the inner area of visual perception;
rendering, for each portion, a first graphical representation of a first subset of a 3D virtual reality to be displayed in the inner area of visual perception; and
rendering, for each portion, a second graphical representation of a second subset of the 3D virtual reality to be displayed in one of the at least one outer areas of visual perception,
wherein rendering of said first and second graphical representations is based on a weight function (350) for weighting one or more rendering parameters for the inner area and the at least one outer area.

2. The computer-implemented method of claim 1, wherein said one or more rendering parameters comprise an information density and an update rate, and wherein said weighting comprises weighting the information density across the inner area and the at least one outer area and weighting the update rate across the inner area and the at least one outer area, respectively.

3. The computer-implemented method of claim 1 or 2, wherein rendering a representation of the 3D virtual reality comprises:
calculating, for each eye, a flattened two-dimensional, 2D, image from the 3D virtual reality; and
displaying, for each eye, the flattened 2D image to the respective eye of the user; and/or
wherein the first and second subsets of the 3D virtual reality for watching with the left eye are different from the first and second subsets of the 3D virtual reality for watching with the right eye and are linked to each other so that, when displayed to the respective eye, a 3D perception of the virtual reality is experienced by the user.

4. The computer-implemented method of any of claims 1 to 3, wherein the weight function of the update rate is based on a rate at which the eye is able to process changes within its field of view; and/or
wherein the information density defines at least one of:
a pixel density of the rendered graphical representation, wherein the pixel density in the inner area and the at least one outer area of perception is defined according to a pixel density weighting function;
a color density of the rendered graphical representation, wherein the color density in the inner area and the at least one outer area of perception is defined according to a color density weighting function; and
a contrast of the rendered graphical representation, wherein the contrast in the inner area and the at least one outer area of perception is defined according to a contrast weighting function.

5. The computer-implemented method of any of claims 1 to 3, wherein an interpolation algorithm is used for calculating the rendered second graphical representation of the second subset of the 3D virtual reality to be displayed in the outer area of visual perception.

6. The computer-implemented method of any of claims 1 to 5, further comprising for each eye:
determining a plurality of additional outer areas of visual perception, wherein each of the plurality of additional outer areas surrounds the inner area of visual perception; and
rendering, for each of the additional outer areas, an additional graphical representation of the 3D virtual reality to be displayed in the respective outer area of visual perception, wherein rendering of the additional graphical representations is based on said weight functions.

7. The computer-implemented method of any of claims 1 to 6, wherein the 3D virtual reality is an augmentation for a visual representation of a real world seen through the virtual reality equipment.

8. A virtual reality equipment (100) for rendering three-dimensional, 3D, graphics information of a virtual reality to be displayed, the virtual reality equipment comprising:
two portions (102, 104) each related to one eye of a user when using the virtual reality equipment;
an eye sensor (103, 105) for determining, for each portion, an inner area (310) and at least one outer area (320) of visual perception, wherein the inner area of visual perception comprises a focal point (301), and wherein the at least one outer area of visual perception surrounds the inner area of visual perception;
a rendering processor for rendering, for each portion, a first graphical representation of a first subset of a 3D virtual reality to be displayed in the inner area of visual perception and for rendering, for each portion, a second graphical representation of a second subset of the 3D virtual reality to be displayed in one of the at least one outer areas of visual perception,
wherein rendering of said first and second graphical representations is based on a weight function (350) for weighting one or more rendering parameters for the inner area and the at least one outer area.

9. The virtual reality equipment of claim 8, wherein said one or more rendering parameters comprise an information density and an update rate, and wherein said weighting comprises weighting the information density across the inner area and the at least one outer area and weighting the update rate across the inner area and the at least one outer area, respectively

10. The virtual reality equipment of claim 8 or 9, wherein rendering a representation of the 3D virtual reality comprises:
calculating a flattened two-dimensional, 2D, image from the 3D virtual reality; and
displaying the flattened 2D image to the respective eye of the user; and/or
wherein the first and second subsets of the 3D virtual reality for watching with the left eye are different from the first and second subsets of the 3D virtual reality for watching with the right eye and are linked to each other so that, when displayed to the respective eye, a 3D perception of the virtual reality is experienced by the user.

11. The virtual reality equipment of any of claims 8 to 10, wherein the weight function of the update rate is based on a rate at which the eye is able to process changes within its field of view; and/or
wherein the information density defines at least one of:
a pixel density of the rendered graphical representation, wherein the pixel density in the inner area and the at least one outer area of perception is defined according to a pixel density weighting function;
a color density of the rendered graphical representation, wherein the color density in the inner area and the at least one outer area of perception is defined according to a color density weighting function; and
a contrast of the rendered graphical representation, wherein the contrast in the inner area and the at least one outer area of perception is defined according to a contrast weighting function.

12. The virtual reality equipment of any of claims 8 to 10, wherein an interpolation algorithm is used for calculating the rendered second graphical representation of the second subset of the 3D virtual reality to be displayed in the outer area of visual perception.

13. The virtual reality equipment of any of claims 8 to 12, wherein determining for each eye further comprises:
determining a plurality of additional outer areas of visual perception, wherein each of the plurality of additional outer areas surrounds the inner area of visual perception; and
rendering, for each of the additional outer areas, an additional graphical representation of the 3D virtual reality to be displayed in the respective outer area of visual perception, wherein rendering of the additional graphical representations is based on said weight functions.

14. The virtual reality equipment of any of claims 8 to 13, wherein the 3D virtual reality is an augmentation for a visual representation of a real world seen through the virtual reality equipment.

15. A computer-readable medium storing computer-readable program instructions for causing a computer to perform the method of claim 1.
